(19) Europäisches Patentamt
European Patent Office
Office européen des brevets

(11) **EP 1 468 403 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(21) Anmeldenummer: 03731712.0

(22) Anmeldetag: **24.01.2003**

(51) Int Cl.:
***G07B 15/00*** *(2006.01)*

(86) Internationale Anmeldenummer:
**PCT/EP2003/000711**

(87) Internationale Veröffentlichungsnummer:
**WO 2003/063089 (31.07.2003 Gazette 2003/31)**

(54) **VERFAHREN ZUM BESTIMMEN EINER FAHRTSTRECKE IN EINEM STRECKENNETZ UND ZUM BESTIMMEN VON FÜR DIE STRECKENBENUTZUNG ZU ENTRICHTENDEN GEBÜHREN**

METHOD FOR DETERMINING A ROUTE IN A NETWORK OF ROUTES AND FOR DETERMINING THE TOLL TO BE PAID FOR THE USE OF SAID ROUTE

PROCEDE POUR DETERMINER UN ITINERAIRE DANS UN RESEAU D'ITINERAIRES ET POUR DETERMINER LES DROITS A ACQUITTER POUR L'UTILISATION DE CET ITINERAIRE

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **25.01.2002 DE 10203097**

(43) Veröffentlichungstag der Anmeldung:
**20.10.2004 Patentblatt 2004/43**

(73) Patentinhaber: **AGES Arbeitsgemeinschaft Gebührenentrichtungssystem GmbH & Co. OHG 40470 Düsseldorf (DE)**

(72) Erfinder:
• **TOLLAS, Uwe**
  **12489 Berlin (DE)**

• **LOLIES, Henrik**
  **12489 Berlin (DE)**
• **WOCHER, Berthold**
  **69251 Gaiberg (DE)**
• **ROGALSKI, Melanie**
  **40479 Düsseldorf (DE)**

(74) Vertreter: **Burrichter, Arwed Andreas et al COHAUSZ & FLORACK Patent- und Rechtsanwälte Bleichstrasse 14 40211 Düsseldorf (DE)**

(56) Entgegenhaltungen:
**EP-A- 0 671 603        DE-A- 19 836 485
US-A- 5 521 826**

EP 1 468 403 B1

# EP 1 468 403 B1

## Beschreibung

Die Erfindung betrifft ein Verfahren zum Bestimmen einer Fahrtroute und zur der Benutzung dieser Fahrtroute vorausgehenden Erhebung von für die Benutzung zu entrichtenden Gebühren unter Berücksichtigung eines Start- und eines Zielpunktes in einem vorgegebenen Streckennetz.

Es sind verschiedene Systeme zur Erhebung von Mautgebühren für Kraftfahrzeuge, insbesondere für Lastkraftwagen, auf Autobahnen oder Fernstraßen bekannt, bei denen die zu zahlende Mautgebühr nach der zurückgelegten Strecke berechnet wird.

Zum einen sind manuelle Systeme bekannt, bei denen der mautpflichtige Verkehr durch manuelle Mautkontroll- und -zahlstellen geleitet wird. Die Berechnung der Mautgebühr anhand der gefahrenen Strecke erfolgt mit Hilfe von Codekarten, die an der Mautkontrollstelle an die Kraftfahrer ausgegeben und von diesen an der Mautzahlstelle wieder zurückgegeben werden. Es findet also eine Ausfahrtkontrolle des gesamten mautpflichtigen Verkehrs statt. Zwar haben derartige Codekarten-Systeme den Vorteil, dass sie von allen Fahrzeugen gleichermassen genutzt werden können, ohne dass diese über eine besondere technische Ausrüstung verfügen müssen. Nachteilig sind jedoch die hohen baulichen und personellen Aufwendungen für die Mautstellen. Nachteilig ist ferner, dass die Durchleitung des gesamten mautpflichtigen Verkehrs durch die Mautstellen zu einer erheblichen Behinderung des Verkehrsflusses führt.

Zum anderen sind automatische Mauterhebungs- und -zahlungssysteme bekannt, bei denen die Fahrzeuge mit maschinenlesbaren Identifikationsmitteln, etwa mit maschinenlesbaren Kfz-Kennzeichen oder Transpondern, ausgerüstet werden, welche bei Auf- und Abfahrt auf eine mautpflichtige Straße unter Verbuchung der für die gefahrene Strecke fälligen Mautgebühr automatisch eingelesen werden. Derartige automatische Verbuchungssysteme ermöglichen selbst bei hohem Verkehrsaufkommen eine schnelle, korrekte und unproblematische Mautgebührenerhebung, ohne dass es zu Verkehrsverzögerungen kommt. Nachteilig ist jedoch, dass mautpflichtige Fahrzeuge, die nicht mit den entsprechenden maschinenlesbaren Identifikationsmitteln ausgestattet sind, nicht erfasst werden und somit von dem automatischen Mautsystem keinen Gebrauch machen können.

Um einen diskriminierungsfreien Zugang zum Mautsystem für alle mautpflichtigen Fahrzeuge aus dem In- und Ausland sicherzustellen, ist es daher erforderlich, neben dem automatischen Erfassungssystem auch eine manuelle Einbuchungsmöglichkeit für solche Fahrzeuge bereitzustellen, die nicht am automatischen System teilnehmen können.

Zur Ergänzung des automatischen Mauterhebungssystems wurde daher ein manuelles Mauterhebungssystem vorgeschlagen, bei dem zur Einsparung von Personal und zur Gewährleistung eines gleichmäßigen Verkehrsflusses auf die aufwendige Ausfahrtkontrolle des gesamten mautpflichtigen Verkehrs verzichtet wird und bei denen stattdessen nur stichprobenmäßige Kontrollen durchgeführt werden. Bei derartigen bekannten manuellen Systemen bucht sich der mautpflichtige Kraftfahrer an hierfür vorgesehenen Zahlstellen, welche etwa an Autobahntankstellen installiert sind, manuell in das Mautsystem ein und entrichtet im Voraus eine für eine vom Mautpflichtigen festgelegte Route berechnete Mautgebühr. Über die Entrichtung der Mautgebühr erhält der Kraftfahrer einen Beleg, mit dem er die ordnungsgemäße Entrichtung der Mautgebühr bei einer eventuellen Kontrolle nachweisen kann.

Nachteilig an dem bekannten manuellen System ist jedoch, dass der Kraftfahrer auf seine zur Mautberechnung herangezogene Route festgelegt ist. Durch die Routenfestlegung ist der Kraftfahrer verpflichtet, bei jedem Stau, den er umfahren möchte, eine Zahlstelle zur Umbuchung anzufahren. Er kann somit nicht mehr flexibel auf Staumeldungen reagieren. Die mangelnde Flexibilität dieses manuellen Mautsystems führt zu Unzufriedenheit unter den Mautpflichtigen und regt zu mißbräuchlichem Verhalten an. Die hohe Stornoquote wegen umfahrener Staus führt ferner zu einer erhöhten Belastung des Zahlstellenpersonals. Eine detailgetreue Buchung jeder Route ist daher für die Mautpflichtigen einerseits und für die Zahlstellen andererseits unter den genannten Aspekten nicht praktikabel.

Aus dem Stand der Technik, beispielsweise der EP 0 671 603 A1 und der US 2001/0047241 A1, sind auch im Fahrzeug installierte reine Navigationssysteme zur Ermittlung einer Referenzfahrtroute und möglicher Abweichrouten bekannt. Eine Erhebung von Mautgebühren ist mit diesen Systemen aber nicht möglich.

Es ist daher die Aufgabe der vorliegenden Erfindung, ein Verfahren der eingangs genannten Art zu schaffen, welches bei kostengerechter Vorauszahlung der Streckengebühr die Benutzerfreundlichkeit verbessert und dadurch die Zufriedenheit der Nutzer eines Mauterhebungssystems erhöht.

Die zuvor hergeleitete und aufgezeigte Aufgabe wird erfindungsgemäß gelöst durch ein Verfahren zum Bestimmen einer Fahrtroute und zur der Benutzung dieser Fahrtroute vorausgehenden Erhebung von für die Benutzung zu entrichtenden Gebühren unter Berücksichtigung eines Start- und eines Zielpunktes in einem vorgegebenen Streckennetz, bei dem durch eine an einer Anschlussstelle des Streckennetzes, z. B. Tankstelle, vorgesehene Datenverarbeitungseinrichtung folgende Schritte durchgeführt werden:

- Entgegennehmen einer Startpunktinformation und einer Zielpunktinformation;

- Ermitteln einer Referenzfahrtroute von dem Startpunkt zu dem Zielpunkt unter Berücksichtigung von in einem Datenspeicher abgelegten Streckeninformationen;

- Bestimmen eines Kennwertes zu der ermittelten Referenzfahrtroute und Abspeichern desselben in einem Datenspeicher;

- Zuordnen der Referenzfahrtroute zu einem Pool von erlaubten Fahrtrouten;

- Ermitteln einer möglichen Alternativfahrtroute vom Startpunkt zum Zielpunkt unter Berücksichtigung von in einem Datenspeicher abgelegten Streckeninformationen;

- Bestimmen des dieser Alternativfahrtroute zugeordneten Kennwertes und Abspeichern desselben in einem Datenspeicher;

- Vergleichen des der Alternativfahrtroute zugeordneten Kennwertes mit dem der Referenzfahrtroute zugeordneten Kennwert;

- Zuordnen der Alternativfahrtroute zu dem Pool von erlaubten Fahrtrouten, sofern die Abweichung des der Alternativfahrtroute zugeordneten Kennwertes von dem der Referenzfahrtroute zugeordneten Kennwert innerhalb eines Toleranzbereiches liegt, und Abspeichern des Pools in einem Datenspeicher;

- Ermitteln und Erheben einer für die Benutzung der zum Pool gehörenden Routen zu entrichtenden Gebühr unter Berücksichtigung eines oder mehrerer der ermittelten Kennwerte und

- Ausgeben eines Belegs für die Gebühr und ggf. der dem Pool zugeordneten Fahrtrouten durch geeignete Ausgabemittel wie einen Monitor und/oder einen Drucker und/oder ein Sprachinformationssystem.

Vorteilhafte Ausgestaltungen des erfindungsgemäßen Verfahrens sind Gegenstand der Unteransprüche und werden im folgenden näher erläutert.

Das erfindungsgemäße Verfahren ermittelt für eine vom Mautpflichtigen anzugebene, zwischen einem bestimmten Start- und Zielpunkt liegende Route innerhalb eines vorgegebenen Streckennetzes eine Mautgebühr, die innerhalb eines bestimmten Toleranzbereiches Abweichungen von einer ermittelten Fahrtstrecke (Referenzfahrtstrecke) zwischen Start- und Zielpunkt zuläßt, ohne dass - wie dies bei den bekannten manuellen Mauterhebungssystemen der Fall ist - zusätzliche Mautgebühren zu entrichten und/oder Umbuchungen im System durchzuführen sind. Bei dem erfindungsgemäßen Verfahren handelt es sich also um ein "intelligentes" Mautberechnungssystem, welches sich im Gegensatz zu aus dem Stand der Technik bekannten Verfahren nicht darauf beschränkt, die für eine detailliert vorgegebene Strecke fällige Mautgebühr zu berechnen, sondern in Abhängigkeit von möglichen Streckenführungen eine unter Flexibilitätsgesichtspunkten angemessene Mautgebühr ermittelt und ausgibt.

Das erfindungsgemäße Verfahren ist benutzerfreundlich, da der Mautpflichtige lediglich Start- und Zielpunkt seiner geplanten Fahrt eingeben muss. Gegenüber einer detaillierten Eingabe der Fahrtroute wird der Einbuchungsvorgang daher wesentlich verkürzt. Die mit der entrichteten Mautgebühr erhaltene Möglichkeit, innerhalb einer bestimmten Toleranz von der vorgegebenen Route abzuweichen, erlaubt es dem Mautpflichtigen, flexibel auf Staumeldungen zu reagieren. Eine exakte Routenplanung im Vorfeld ist nicht erforderlich. Eine hohe Stornoquote wegen umfahrener Staus und der damit verbundene Zeitaufwand wird unterbunden. Der Mautpflichtige hat damit die Möglichkeit, seiner Mautpflicht nachzukommen, ohne unzumutbare Wartezeiten in Kauf zu nehmen.

Das erfindungsgemäße Verfahren setzt zunächst voraus, dass durch eine Datenverarbeitungseinrichtung, bei der es sich um einen Mikrocomputer oder eine beliebige andere, zur elektronischen Verarbeitung von Daten geeignete Vorrichtung handeln kann, eine Startpunkt- und eine Zielpunktinformation entgegengenommen wird.

Die Entgegennahme der Start- und Zielinformationen durch die Datenverarbeitungseinrichtung kann beispielsweise durch Eingabe der Informationen über ein geeignetes Eingabemittel wie eine Tastatur oder einen berührungsgesteuerten Bildschirm erfolgen. Die Entgegennahme dieser Informationen kann auch durch Aufrufen einer in einem Datenspeicher abgelegten Information erfolgen. So ist es zum Beispiel denkbar, dass eine an einer bestimmten Anschlußstelle im Streckensystem (z.B. an einer Autobahntankstelle) installierte Datenverarbeitungseinrichtung ihre in einem Datenspeicher abgelegte Standortinformation als Startpunktinformation aufruft und für die weiteren durchzuführenden Schritte zugrundelegt.

Gemäß einer besonders zweckmäßigen Ausgestaltung der Erfindung stellt die Datenverarbeitungseinrichtung eine Mehrzahl von im Streckennetz vorhandenen, in einem Datenspeicher der Datenverarbeitungseinrichtung gespeicherten Anschlußstellen (z.B. Autobahntankstelle mit Mautzahlstellenterminal) zur Verfügung, innerhalb derer eine Auswahl von Start- und Zielpunkten getroffen werden kann.

Anhand der entgegengenommenen Start- und Zielpunktinformationen ermittelt die Datenverarbeitungseinrichtung unter Berücksichtigung von in einem Datenspeicher abgelegten Streckeninformationen eine Referenzfahrtstrecke.

Gemäß einer bevorzugten Ausführungsform der Erfindung handelt es sich bei der Referenzfahrtstrecke um die entfernungsmäßig kürzeste Route zwischen Start- und Zielpunkt.

Die Streckeninformationen sind im Datenspeicher der Datenverarbeitungseinrichtung vorzugsweise so abgelegt, dass jede Streckeninformation eine Anschlußstelle oder einen Streckenknotenpunkten eines Straßennetzes repräsentiert.

Gemäß einer weiteren bevorzugten Ausführungsform der Erfindung ist jeder der Streckeninformationen jeweils mindestens ein Datensatz zugeordnet, welcher Informationen zu den jeweils benachbarten Streckeninformationen und zur Größe des Kennwertes für die jeweiligen Fahrtstreckensegmente enthält, die aus der Strecke zwischen zwei benachbarten Streckeninformationen gebildet werden. Auf diese Weise sind die im Datenspeicher der Datenverarbeitungseinheit gespeicherten Streckeninformationen als ein digitales Streckennetz darstellbar.

Die Ermittlung der Fahrtroute(n) und/oder der Alternativroute(n) durch die Datenverarbeitungseinrichtung anhand der in den Datensätzen vorhandenen Informationen kann beispielsweise durch Kombination von Fahrtstreckensegmenten, die aus der Strecke zwischen zwei benachbarten Streckeninformationen gebildet werden, erfolgen.

In einem weiteren Schritt wird dann ein Kennwert zu der ermittelten Referenzfahrtstrecke bestimmt und in einem Datenspeicher der Datenverarbeitungseinrichtung abgelegt. Der Kennwert kann beispielsweise eine Zahl sein. Beim Kennwert kann es sich aber auch um eine komplexe Größe, z.B. um einen Vektor, handeln.

Grundsätzlich kann jeder Kennwert, der geeignet ist, die jeweilige Strecke zu charakterisieren, als Bezugsgröße für die weitere Berechnung der Alternativstrecken verwendet werden. So ist es denkbar, als Kennwert bestimmte Charakteristika der befahrenen Strecken, wie Straßenzustand, Herstellungskosten, Geländeprofil (Steigungen / Gefälle) etc. heranzuziehen. Gemäß einer besonders zweckmäßigen Ausgestaltung der Erfindung repräsentiert der Kennwert jedoch die streckenmäßige Gesamtentfernung zwischen Start- und Zielpunkt.

Möglich ist es aber alternativ oder ergänzend auch, als Kennwert den Betrag der für die jeweilige Fahrtstrecke bei ausschließlicher Benutzung dieser Strecke zu entrichtenden Gebühr heranzuziehen.

Die Ermittlung des Kennwertes für die Fahrroute kann beispielsweise durch Addieren oder sonstiges Verrechnen oder Verknüpfen der Kennwerte für die einzelnen Fahrtstreckenabschnitte der jeweiligen Route durchgeführt werden. Im auf die Zuordnung des Referenzkennwertes folgenden Schritt des erfindungsgemäßen Verfahrens wird mindestens eine mögliche Alternativroute vom Startpunkt zum Zielpunkt unter Berücksichtigung von in einem Datenspeicher abgelegten Streckeninformationen ermittelt. Die Ermittlung der Alternativrouten kann in der gleichen Weise, wie zuvor für die Referenzroute beschrieben, erfolgen.

Analog der Bestimmung des Referenzkennwertes für die Referenzroute wird in einem weiteren Schritt des erfindungsgemäßen Verfahrens der entsprechende Kennwert für die jeweils ermittelte Alternativroute bestimmt und in einem Datenspeicher abgelegt.

Dann wird durch die Datenverarbeitungseinrichtung der der Alternativroute zugeordnete Kennwert mit dem der Referenzroute zugeordneten Kennwert verglichen.

Sofern das Ergebnis dieses Vergleiches ergibt, daß die Abweichung des der Alternativroute zugeordneten Kennwertes von dem der Referenzroute zugeordneten Referenzkennwert innerhalb eines Toleranzbereiches liegt, wird gemäß einem weiteren Schritt des erfindungsgemäßen Verfahrens die Alternativroute zu einem Pool von erlaubten Fahrtrouten zugeordnet. Dieser Pool enthält im Ergebnis die erlaubten Routen, die der Mautpflichtige ohne Zuzahlung von weiteren Mautgebühren frei benutzen darf.

Der Toleranzbereich ist seitens des Betreibers des Straßennetzes vorgegeben und in einem Datenspeicher der Datenverarbeitungseinrichtung abrufbar gespeichert. Es ist auch möglich, eine Anzahl von verschiedenen Toleranzbereichen vorzugeben, die in Abhängigkeit von bestimmten Faktoren, wie z.B. der Referenzfahrtstreckenlänge, der Zugehörigkeit zu einer Region, der Lastklasse des jeweiligen Fahrzeugs aufgerufen werden können. Im Nahbereich, in dem eine hohe Flexibilität erforderlich ist, kann beispielsweise ein relativ großer Toleranzbereich mit hohen Toleranzgrenzen von 10 % bis 15 % herangezogen werden, während für Fernverkehrsstrecken Toleranzen von maximal 10 % zweckentsprechend sein kann.

Die Ermittlung der Alternativfahrtstrecken und der zugehörigen Kennwerte sowie die Prüfung, ob die Kennwerte im Toleranzbereich liegen, kann beliebig häufig für beliebig viele Alternativrouten durchgeführt werden.

Wird beispielsweise die entfernungsmäßig kürzeste Strecke und als Referenzkennwert deren kilometermäßige Länge , so wird dem Pool von erlaubten Fahrtstrecken jede Alternativroute zugeordnet, welche die kürzeste Strecke (= Referenzroute) um eine innerhalb des jeweils vorgegebenen Toleranzbereiches liegende Entfernung überschreitet.

In einem weiteren Schritt des erfindungsgemäßen Verfahrens wird die zu entrichtende Gebühr unter Berücksichtigung eines der ermittelten Kennwerte ausgegeben.

Gemäß einer bevorzugten Ausführungsform der Erfindung wird die zu entrichtende Gebühr unter Berücksichtigung des Kennwertes mindestens einer erlaubten Fahrtroute ausgegeben. So ist es zum Beispiel denkbar, dass der Gebührenberechnung die entfernungsmäßig längste erlaubte Fahrtroute zugrunde gelegt wird. Denkbar sind aber auch Mischkalkulationen, um eine möglichst hohe Kostengerechtigkeit sicherzustellen.

Bei der Gebührenermittlung und -ausgabe können zusätzlich fahrzeugspezifische Informationen wie Länderkennzeichen, Achsklasse und Schadstoffemissionsklasse berücksichtigt werden. Ferner können auch Ortsklassen, d.h. je nach befahrener Region unterschiedliche Gebühren, berücksichtigt werden. Gemäß einer bevorzugten Ausführungsform der Erfindung ist daher vorgesehen, dass die Datenverarbeitungseinrichtung diese Informationen durch geeignete Eingabevorrichtungen ebenfalls entgegennimmt, in einem Datenspeicher ablegt und bei der Gebührenberechnung berücksichtigt.

Die Ausgabe der zu entrichtenden Gebühr, ggf. gemeinsam mit den ermittelten möglichen Fahrtstrecken, erfolgt durch geeignete Ausgabemittel, etwa durch einen Monitor und/oder einen Drucker und/oder durch ein Sprachinformationsystem. Gemäß einer besonders bevorzugten Ausführungsform der Erfindung wird ein Beleg gedruckt, aus dem die Mautgebühr und die möglichen Fahrtstrecken hervorgehen.

Nachfolgend wird die Erfindung anhand von einer ein Ausführungsbeispiel darstellenden Zeichnung näher erläutert. Es zeigen:

Fig. 1    eine schematische Darstellung von in einer Datenverarbeitungseinrichtung gespeicherten Streckeninformationen zur Ermittlung einer Fahrtstrecke nach dem erfindungsgemäßen Verfahren;

Fig. 2    eine schematische Darstellung einer Teilmenge der in Fig. 1 dargestellten Streckeninformationen und

Fig. 3.    eine schematische Darstellung von aus Streckeninformationen und Kennwerten gebildeten Fahrtstreckensequenzen zur Ermittlung von erlaubten Fahrtrouten nach dem erfindungsgemäßen Verfahren.

Das nachfolgend erläuterte Verfahren dient zum Bestimmen von Fahrtrouten und Gebühren in einem Autobahnnetz. Eine in den Figuren nicht dargestellte Datenverarbeitungseinrichtung umfaßt einen zentralen Datenserver und eine Benutzereinrichtung, die mit einem Eingabeelement, wie z.B. einer Tastatur, einem Datenspeicher und Ausgabelementen, wie z.B. Monitor, Drucker ausgestattet ist.

Über die Tastatur nimmt die Benutzereinrichtung die vom jeweiligen Kraftfahrer eingegebenen Start- und Zielpunktinformationen entgegen. Ein Beispiel für die Entgegennahme derartiger Informationen ist die Eingabe der "Anschlußstelle A1" als Startpunkt und "Anschlußstelle A7" als Zielpunkt.

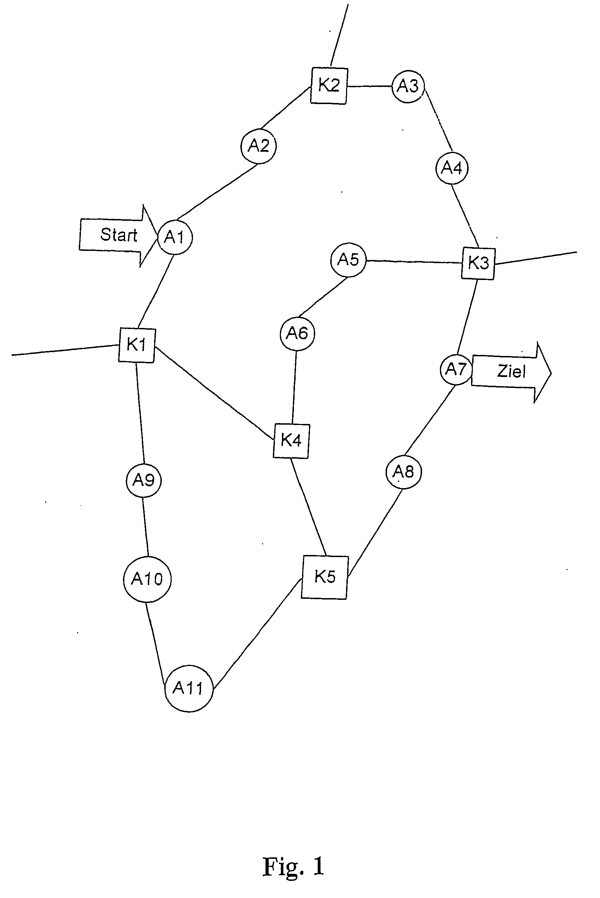

Im Datenspeicher der Benutzereinrichtung ist ein auf den Daten des in Fig. 1 schematisch dargestellten Autobahnnetzes basierendes idealisiertes Netz gespeichert. In diesem sind als "Knotenpunkte" die Autobahnkreuze, Autobahndreiecke und Anschlußstellen des Autobahnnetzes gespeichert. Zu jedem Knotenpunkt ist ein Datensatz hinterlegt, in dem jeweils mindestens ein benachbarter Knotenpunkt sowie die kilometermäßige Entfernung zu dem betreffenden benachbarten Knotenpunkt gespeichert.In diesem Sinne bilden in dem in Fig. 1 dargestellten idealisierten Autobahnnetz die vorhandenen Anschlußstellen A1 bis A11, Autobahndreiecke K2, K4, K5 und Autobahnkreuze K1, K3 jeweils einen Knotenpunkt.

Die gespeicherten Daten werden beispielsweise aus einer auf einem Server befindlichen zentralen Datenbank, etwa einer für Navigationssysteme üblichen Geodatenbank, bezogen und über eine Datenleitung an die Benutzereinrichtung übertragen. Auf diese Weise ist eine ständige Aktualisierung der im Terminal gespeicherten Streckeninformationen gewährleistet.

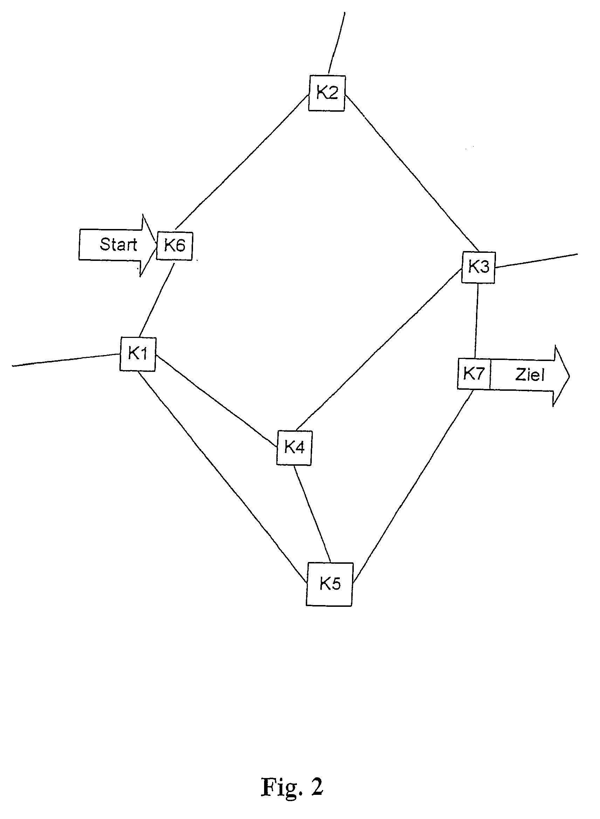

Bei der jeweiligen Ermittlung einer Fahrtroute wird das zuvor beschriebene idealisierte Autobahnnetz (Fig. 1) auf ein vereinfachtes Referenznetz reduziert, indem von den zum in Fig. 1 dargestellten Autobahnnetz gehörenden Knotenpunkten nur noch die für die Fahrt vom Start- zum Zielpunkt relevanten Knotenpunkte berücksichtigt werden. Dazu werden von dem idealisierten Autobahnetz alle in Fig. 1 noch dargestellten Anschlusstellen A2-A6, A8-A11, die nicht Startpunkt A1 oder Zielpunkt A7 sind, aus der bei der Ermittlung der Routen berücksichtigten Datenmenge entfernt. Die Anschlussstellen A1, A7, die als Start und Ziel benötigt werden, werden dagegen als Knotenpunkte K6, K7 in die weiteren Berechnungen einbezogen (Fig. 2).Auf diese Weise entsteht ein vereinfachtes Referenznetz (Fig. 2), das nur noch aus Startpunkt K6 und Zielpunkt K7 sowie den für die Ermittlung der möglichen Strecken zwischen diesen Punkten erforderlichen Knotenpunkte K1-K5 besteht. Basierend auf dem so vereinfachten Referenznetz wird dann die Bestimmung der möglichen Routen und des zu zahlenden Preises durchgeführt.

Dies wird nachfolgend im einzelnen anhand eines vereinfachten Referenznetzes erläutert, bei die in der voranstehend erläuterten Weise bestimmten Knotenpunkte mit den Bezugsziffern A bis G bezeichnet sind.

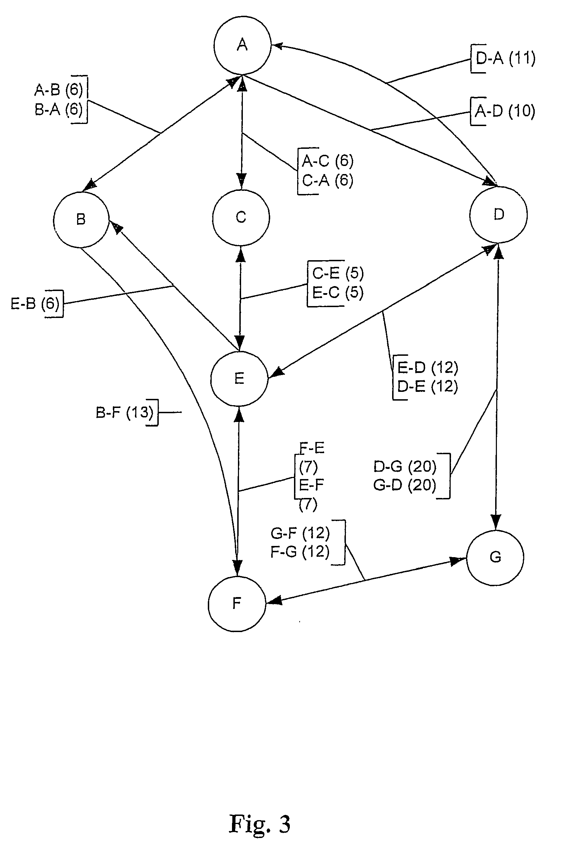

Zu den sieben Knotenpunkten A bis G des in Fig. 3 dargestellten vereinfachten Referenznetzes sind Datensätze hinterlegt, welche die jeweils benachbarten Knotenpunkte A bis G und die zugehörige kilometermäßige Entfernung zu dem bzw. den betreffenden Knotenpunkt(en) enthalten. So sind im Datensatz des Knotenpunkts A die drei benachbarten Knotenpunkte B, C, D und die jeweils zugehörigen Entfernungen für die Streckenabschnitte A-B (6 km), A-C (6 km) und A-D (10 km) gespeichert. Im Datensatz des Knotenpunkts C sind die beiden benachbarten Knotenpunkte A, E und die zugehörigen Entfernungen C-A (6 km) und C-E (5 km) hinterlegt.

Die Entfernung für den Hin- und Rückweg zwischen zwei Knotenpunkten ist in der Regel gleich. So ist beispielsweise der Kennwert für die Strecke A-B (6 km) gleich dem Kennwert für die Strecke B-A 6 km. Es gibt jedoch auch Fälle, in denen die Kennwerte für Hin- und Rückweg zwischen zwei Punkten unterschiedlich sind. Dies kann beispielsweise auf einer unterschiedlichen Straßenführung für die unterschiedlichen Fahrtrichtungen liegen. So unterscheidet sich beispielsweise die Entfernung für die Strecke A-D (10 km) von der Entfernung (11 km), die in der entgegengesetzten Richtung zurückgelegt werden muß, um vom Knotenpunkt A zum Knotenpunkt D zu kommen.

Ferner ist beispielsweise zwischen den Knotenpunkten B und F; E und B die Befahrung der Strecke nur in eine Richtung möglich. Dementsprechend ist beispielsweise dem Knotenpunkt B die Entfernung der Strecke B-F (13 km) zugeordnet, während der Datensatz des Knotenpunkts F keine Angabe zur Entfernung für die entsprechende Strecke F-B enthält.

Die Ermittlung der möglichen Fahrtrouten erfolgt in drei Schritten durch Kombination von Fahrtstreckenabschnitten:

(1) Ermittlung der kürzesten Fahrtroute vom Startpunkt A zum Zielpunkt F;

(2) Ermittlung aller möglichen Fahrtstrecken vom Startpunkt A zum Zielpunkt F;

(3) Ermittlung der erlaubten Routen aus der Gruppe der möglichen Fahrtrouten

Für die Ermittlung der kürzesten Strecke vom Start A zum Ziel F kann die Prozedur von Dijkstra verwendet werden, welche an sich bekannt ist und daher hier im einzelnen nicht nochmals erläutert wird.

In Tab. 1 sind für eine Fahrt von A nach F jeweils die sich dementsprechend ergebenden möglichen Routen , die kürzeste Route (Referenzroute) sowie die erlaubten Routen eingetragen.

Tab. 1

| Referenzstrecke | mögliche Strecken | erlaubte Strecken |
|---|---|---|
| A-C; C-E; E-F (18) | A-B; B-F (19) <br> A-C; C-E; E-F (18) <br> A-D; D-G; G-F (42) <br> A-C; C-E; E-D; D-G; G-F (55) | A-C; C-E; E-F (18) <br><br> A-B; B-F (19) |

Wie aus Tab. 1 ersichtlich, gibt es für eine Fahrt von A nach F vier mögliche Fahrtstrecken mit unterschiedlichen, in der Tab. 1 in Klammern gesetzten Weglängen, die durch Addieren der Entfernungen der einzelnen Streckenabschnitte ermittelt worden sind. Von den vier möglichen Fahrtstrecken ist die Strecke A-C; C-E; E-F mit einer gesamten Fahrstreckenlänge von 18 km die kürzeste Strecke. Ist als Auswahlkriterium für die Referenzstrecke das Merkmal "kürzeste Gesamtstreckenlänge" festgelegt worden, so wird diese Route als Referenzroute gewählt. Ihre gesamte Streckenlänge bildet dementsprechend den Referenzkennwert, an dem sich die anschließend durchgeführte Auswahl der "erlaubten Strecken" orientiert

Dazu werden aus der Gruppe aller "möglichen Strecken" als Kennwerte die jeweiligen Gesamtlängen dieser Strecken festgestellt. Die betreffenden Kennwerte sind, wie gesagt, in der zweiten Spalte von Tab. 1 jeweils in Klammern hinter der jeweiligen Route angegeben.

Aus der Gruppe der möglichen Routen werden dann diejenigen Routen ausgewählt, deren Kennwert (gesamte Weglänge) den Referenzkennwert (gesamte Weglänge der Referenzroute, d.h. 18 km) um nicht mehr als 10 % (1,8 km) überschreiten. Diese Routen werden als *erlaubte* Routen bezeichnet. Die maximale Weglänge der erlaubten Routen beträgt also 19,8 km. Von den zuvor ermittelten vier möglichen Strecken werden daher zwei Routen als erlaubte Routen ausgewählt: Die Referenzroute A-C; C-E; E-F (18 km) und die Strecke A-B; B-F (19 km).

Die für eine Fahrt von A nach F für die Straßenbenutzung zu entrichtende Mautgebühr wird unter Zugrundelegung der Weglänge der längsten erlaubten Fahrtstrecke (A-B; B-F) nach der folgenden Formel

```
Gebühr = Gebührenbasissatz x Gebührenfaktor x Weglänge
```

ermittelt.

Der Gebührenbasissatz ist eine für eine bestimmte Wegeinheit (z.B. 1 km) zu entrichtende Grundgebühr.

Der Gebührenfaktor ist eine Zahl größer oder kleiner 1 und hängt ab von verschiedenen Fahrzeugdaten wie Achsklasse, Schadstoffemissionsklasse und Ortsklasse.

Zur Vermeidung von Rundungsdifferenzen ist ferner vorgesehen, dass die Gebühr für jeden Abschnitt der Fahrtstrecke einzeln ermittelt wird und dann über die Route aufaddiert wird. Damit wird sichergestellt, dass für jeden Abschnitt und jede Fahrtstrecke im manuellen System immer exakt der Preis wie in einem entsprechenden automatischen System ermittelt wird.

**Patentansprüche**

1. Verfahren zum Bestimmen einer Fahrtroute und zur der Benutzung dieser Fahrtroute vorausgehenden Erhebung von für die Benutzung zu entrichtenden Gebühren unter Berücksichtigung eines Start- und eines Zielpunktes in einem vorgegebenen Streckennetz, bei dem durch eine an einer Anschlussstelle des Streckennetzes, z. B. Tankstelle, vorgesehene Datenverarbeitungseinrichtung folgende Schritte durchgeführt werden:

   - Entgegennehmen einer Startpunktinformation und einer Zielpunktinformation;
   - Ermitteln einer Referenzfahrtroute von dem Startpunkt zu dem Zielpunkt unter Berücksichtigung von in einem Datenspeicher abgelegten Streckeninformationen;
   - Bestimmen eines Kennwertes zu der ermittelten Referenzfahrtroute und Abspeichern desselben in einem Datenspeicher;
   - Zuordnen der Referenzfahrtroute zu einem Pool von erlaubten Fahrtrouten;
   - Ermitteln einer möglichen Alternativfahrtroute vom Startpunkt zum Zielpunkt unter Berücksichtigung von in einem Datenspeicher abgelegten Streckeninformationen;
   - Bestimmen des dieser Alternativfahrtroute zugeordneten Kennwertes und Abspeichern desselben in einem Datenspeicher;
   - Vergleichen des der Alternativfahrtroute zugeordneten Kennwertes mit dem der Referenzfahrtroute zugeordneten Kennwert;
   - Zuordnen der Alternativfahrtroute zu dem Pool von erlaubten Fahrtrouten, sofern die Abweichung des der Alternativfahrtroute zugeordneten Kennwertes von dem der Referenzfahrtroute zugeordneten Kennwert innerhalb eines Toleranzbereiches liegt, und Abspeichern des Pools in einem Datenspeicher;
   - Ermitteln und Erheben einer für die Benutzung der zum Pool gehörenden Routen zu entrichtenden Gebühr unter Berücksichtigung eines oder mehrerer der ermittelten Kennwerte und
   - Ausgeben eines Belegs für die Gebühr und ggf. der dem Pool zugeordneten Fahrtrouten durch geeignete Ausgabemittel wie einen Monitor und/oder einen Drucker und/oder ein Sprachinformationssystem.

2. Verfahren nach Anspruch 1, **dadurch gekennzeichnet, dass** die Datenverarbeitungseinrichtung eine Mehrzahl von im Streckennetz vorhandenen, in einem Datenspeicher der Datenverarbeitungseinrichtung gespeicherten Anschlußstellen zur Verfügung stellt, innerhalb derer eine Auswahl von Start- und Zielpunkten getroffen werden kann.

3. Verfahren nach Anspruch 1 oder 2, **dadurch gekennzeichnet, dass** der Kennwert für die Referenzfahrtroute und die Alternativfahrtroutee die streckenmäßige Entfernung zwischen Start- und Zielpunkt ist.

4. Verfahren nach einem der Ansprüche 1 bis 3, **dadurch gekennzeichnet, dass** der Kennwert für die Referenzfahrtroute und die Alternativfahrtroute dem Betrag der für die Strecke zu entrichtenden Gebühr entspricht.

5. Verfahren nach einem der Ansprüche 1 bis 4, **dadurch gekennzeichnet, dass** als Referenzfahrtroute die Strecke mit der geringsten Entfernung zwischen Start- und Zielpunkt ermittelt wird.

6. Verfahren nach einem der Ansprüche 1 bis 5, **dadurch gekennzeichnet, dass** jede Streckeninformation eine Anschlußstelle oder einen Streckenknotenpunkt eines Straßennetzes repräsentiert.

7. Verfahren nach Anspruch 6, **dadurch gekennzeichnet, dass** jeder der Streckeninformationen je ein Datensatz zugeordnet ist, welcher Informationen zu den jeweils benachbarten Streckeninformationen und zur Größe des Kennwertes für die jeweiligen Fahrtstreckensegmente enthält, die aus der Strecke zwischen zwei benachbarten Streckeninformationen gebildet werden.

8. Verfahren nach Anspruch 6 oder 7, **dadurch gekennzeichnet, dass** die Ermittlung der Fahrtroute(n) und/oder der Alternativfahrtroute(n) anhand der in den Datensätzen vorhandenen Informationen durch Kombination von Fahrtstreckenabschnitten erfolgt, die aus der Strecke zwischen zwei benachbarten Streckeninformationen gebildet werden.

9. Verfahren nach Anspruch 7 oder 8, **dadurch gekennzeichnet, dass** der Kennwert für die Referenzfahrtroute und/oder für die Alternativfahrtroute durch Addieren der Kennwerte für die einzelnen Fahrtstreckenabschnitte der jeweiligen Fahrtstrecke ermittelt wird.

10. Verfahren nach einem der Ansprüche 1 bis 9, **dadurch gekennzeichnet, dass** die zu entrichtende Gebühr unter Berücksichtigung des Kennwertes mindestens einer erlaubten Fahrtroute ausgegeben wird.

11. Verfahren nach einem der Ansprüche 1 bis 10, **dadurch gekennzeichnet, dass** die Datenverarbeitungseinrichtung zusätzlich mindestens eine fahrzeugspezifische Information wie Länderkennzeichen, Achsklasse und Schadstoffemissionsklasse entgegennimmt.

12. Verfahren nach Anspruch 11, **dadurch gekennzeichnet, dass** die Ausgabe der zu entrichtenden Gebühr unter Berücksichtigung mindestens einer fahrzeugspezifischen Information erfolgt.

**Claims**

1. Method for determining a route and for advance collection of the charges payable for the use of this route taking account of a start and an end point in a given route network, in which the following steps are carried out by a data processing system provided at a junction of the route network, e.g. a petrol station:

   - Acceptance of start point and end point information;
   - Determination of a reference route from the start to the end point taking account of route data stored in a data memory;
   - Definition of a parameter for the defined reference route and saving thereof in a data memory;
   - Assignment of the reference route to a pool of permitted routes;
   - Determination of a possible alternative route from start point to end point, taking account of route data saved in a data memory;
   - Definition of the parameter assigned to this alternative route and saving thereof in a data memory;
   - Comparison of the parameter assigned to the alternative route with the parameter assigned to the reference route;
   - Assignment of the alternative route to the pool of permitted routes, insofar as the deviation of the parameter assigned to the alternative route from the reference route lies within a tolerance range, and storing of the pool in a data memory;
   - Determination and collection of a charge to be levied for the use of the routes forming part of the pool taking into account one or more of the parameters determined and
   - Issue of a receipt for the charge and where applicable of the routes assigned to the pool by suitable output means such as a monitor and/or a printer and/or a speech data system.

2. Method according to claim 1, **characterised in that** the data processing system makes available a multiplicity of junctions, available in the route network and stored in a data memory of the data processing system, within which a selection of start points and end points can be made.

3. Method according to claim 1 or 2, **characterised in that** the parameter for the reference route and the alternative route is the separation in terms of distance between start and end point.

4. Method according to one of claims 1 to 3, **characterised in that** the parameter for the reference route and the alternative route corresponds to the amount of the charge to be levied for the route.

5. Method according to one of claims 1 to 4, **characterised in that** the route with the shortest distance between start and end point is determined as reference route.

6. Method according to one of claims 1 to 5, **characterised in that** each item of route data represents a junction or a route node point of a road network.

7. Method according to claim 6, **characterised in that** each of the items of route data is assigned a dataset which contains information on the respective adjacent route data and on the value of the parameter for the respective route segments, which are formed from the distance between two adjacent items of route data.

8. Method according to claim 6 or 7, **characterised in that** the route(s) and/or the alternative route(s) are determined on the basis of the information present in the datasets by combining route sections which consist of the distance between two adjacent items of route data.

9. Method according to claim 7 or 8, **characterised in that** the parameter for the reference route and/or for the alternative route is determined by adding the parameters for the individual route sections of the respective route.

10. Method according to one of claims 1 to 9, **characterised in that** the charge to be levied is output taking into account the parameter of at least one permitted route.

11. Method according to one of claims 1 to 10, **characterised in that** the data processing system additionally collects at least one item of vehicle-specific data, such as country registration, axle class and pollutant emission class.

12. Method according to claim 11, **characterised in that** the output of the charge to be levied takes into account at least one item of vehicle-specific information.

**Revendications**

1. Procédé pour déterminer un itinéraire et pour percevoir, préalablement à l'utilisation de cet itinéraire, des droits à payer pour l'utilisation, en prenant en considération un point de départ et un point de destination dans un réseau routier prédéterminé, pour lequel, au moyen d'un dispositif de traitement de données prévu en un point de raccordement du réseau routier, par exemple une station de service, les étapes suivantes sont accomplies :

    - réception d'une information de point de départ et d'une information de point de destination ;
    - détermination d'un parcours de référence, allant du point de départ au point de destination, en prenant en considération des informations routières placées dans une mémoire de données ;
    - détermination d'une valeur caractéristique concernant le parcours de référence ayant été déterminé, et mémorisation de celle-ci dans une mémoire de données ;
    - association entre le parcours de référence et un groupe d'itinéraires autorisés ;
    - détermination d'un itinéraire alternatif possible, allant du point de départ au point de destination, en prenant en considération des informations routières placées dans une mémoire de données ;
    - détermination de la valeur caractéristique associée à cet itinéraire alternatif et mémorisation de celle-ci dans une mémoire de données ;
    - comparaison de la valeur caractéristique associée à l'itinéraire alternatif à la valeur caractéristique associée au parcours de référence ;
    - association de l'itinéraire alternatif au groupe d'itinéraires autorisés, dans la mesure où l'écart entre la valeur caractéristique, associée à l'itinéraire alternatif, et la valeur caractéristique, associée au parcours de référence, est situé dans les limites d'une plage de tolérance, et mémorisation du groupe dans une mémoire de données ;
    - détermination et perception des droits à payer pour l'utilisation des routes appartenant au groupe, en prenant en considération une ou plusieurs des valeurs déterminées, et
    - édition d'un état concernant les droits et, le cas échéant, les itinéraires associés au groupe, à l'aide de moyens d'édition appropriés, tel qu'un moniteur et/ou une imprimante, et/ou un système d'information vocal.

2. Procédé selon la revendication 1, **caractérisé en ce que** le dispositif de traitement de données met à disposition une pluralité de points de raccordement existant dans le réseau routier, mémorisés dans le dispositif de traitement de données, parmi lesquels peut être effectuée une sélection de points de départ et de points de destination.

3. Procédé selon la revendication 1 ou 2, **caractérisé en ce que** la valeur caractéristique, concernant le parcours de référence et les itinéraires alternatifs, est la distance routière entre le point de départ et le point de destination.

4. Procédé selon l'une des revendications 1 à 3, **caractérisé en ce que** la valeur caractéristique pour le parcours de référence et itinéraire alternatif correspond au montant des droits à payer pour faire la route.

5. Procédé selon l'une des revendications 1 à 4, **caractérisé en ce que** l'on détermine comme parcours de référence la route ayant la distance minimale entre le point de départ et le point de destination.

6. Procédé selon l'une des revendications 1 à 5, **caractérisé en ce que** chaque information routière représente un point de raccordement ou un point de noeud routier d'un réseau routier.

**7.** Procédé selon la revendication 6, **caractérisé en ce qu'**à chacune des informations routières est associé un jeu de données, contenant des informations sur les informations routières chaque fois voisines et sur la grandeur de la valeur caractéristique des segments d'itinéraires respectifs, formés de la route entre deux informations routières voisines.

**8.** Procédé selon la revendication 6 ou 7, **caractérisé en ce que** la détermination du ou des itinéraire(s) et/ou du ou des itinéraire (s) alternatif(s), à l'aide des informations existant dans les jeu de données, est effectuée par une combinaison de tronçons d'itinéraires, formés à partir de la route, entre deux informations routières voisines.

**9.** Procédé selon la revendication 6 ou 8, **caractérisé en ce que** la valeur caractéristique du parcours de référence et/ou de l'itinéraire alternatif est déterminée par addition des valeurs caractéristiques pour les différents tronçons de route concernant la route respective.

**10.** Procédé selon l'une des revendications 1 à 9, **caractérisé en ce que** les droits à payer sont édités en prenant en considération la valeur caractéristique, au moins d'une route autorisée.

**11.** Procédé selon l'une des revendications 1 à 10, **caractérisé en ce que** le dispositif de traitement de données reçoit en plus au moins une information spécifique au véhicule, telles que la caractéristique de la région, la classe d'essieu et la classe d'émission de substances nocives.

**12.** Procédé selon la revendication 11, **caractérisé en ce que** l'édition des droits à payer se fait en prenant en considération au moins une information spécifique au véhicule.

Fig. 1

Fig. 2

A-B (6)
B-A (6)

D-A (11)

A-D (10)

A-C (6)
C-A (6)

C-E (5)
E-C (5)

E-B (6)

E-D (12)
D-E (12)

B-F (13)

F-E
(7)
E-F
(7)

D-G (20)
G-D (20)

G-F (12)
F-G (12)

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0671603 A1

- US 20010047241 A1